# EUROPEAN PATENT APPLICATION

(11) **EP 4 129 723 A1**
(43) Date of publication of application: **08.02.2023**
(21) Application number: 21781606.5
(22) Date of filing: 18.03.2021
(51) Int. Cl.: B60J 10/20, B60J 10/50, B60J 10/75

(54) **VEHICULAR MOLDING**

(30) Priority: 31.03.2020 JP 2020062500
(71) Applicant: Faltec Co., Ltd., Kawasaki-shi, Kanagawa 212-0013 (JP)
(72) Inventor: MITOBE Tomoya, Kawasaki-shi, Kanagawa 212-0013 (JP)
(74) Representative: Troesch Scheidegger Werner AG
(86) International application number: PCT/JP2021/011100
(87) International publication number: WO 2021/200224

(57) **Abstract**

The present invention is a vehicular molding (1) including: a base part (2), an upper touch lip (3) and a lower touch lip (4), wherein the upper touch lip (3) includes an upper root part (3a), an upper sliding part (3b), and a sealing part (3c), and the lower touch lip (4) has a lower root part (4a) and a lower sliding part (4b). A tip end of the upper sliding part (3b) is located outside a tip end of the lower sliding part (4b) with respect to the base part (2) as a center in a state where the tip end of the upper sliding part (3b) is not in contact with a retractable door glass (13).

## Description

### [Technical Field]

The present invention relates to a vehicular molding. Priority is claimed on Japanese Patent Application No. 2020-062500, filed March 31, 2020, the content of which is incorporated herein by reference.

### [Background Art]

In recent years, a vehicle such as a four-wheeled vehicle is equipped with a molding such as an outside molding. An outside molding is attached to an upper edge part of a door panel and prevents foreign matter and water from entering a gap between the outside molding and a door glass of the door panel. The outside molding has a base part attached to the door panel and a plurality of lips provided to protrude from the base part to a door panel side. For example, Patent Document 1 discloses an outside molding including, as the lips, two touch lips abutting on the door glass.

### [Citation List]

### [Patent Document]

[Patent Document 1]
Japanese Unexamined Patent Application, First Publication No. 2012-171559

### [Summary of Invention]

### [Technical Problem]

By the way, when the touch lip as described above is brought into contact with the door glass, the touch lip and the door glass are brought into close contact with each other, but a space is created between the touch lip and the base part. When outside air flows into the space between the touch lip and the base part when a vehicle is traveling or the like, the base part and the touch lip may vibrate due to the flow of the outside air, and an abnormal noise (so-called wind noise) may occur.

The present invention has been made in view of the above-mentioned problems, and an object of the present invention is to suppress occurrence of the abnormal noise when the vehicle is traveling or the like in a vehicular molding provided with a touch lip.

### [Solution to Problem]

The present invention adopts the following configuration as means for solving the above problems.

According to a first aspect of the present invention, a vehicular molding includes a base part connected to a door panel; an upper touch lip and a lower touch lip that are supported by the base part and arranged in a vertical direction, wherein the upper touch lip includes an upper root part fixed to the base part, an upper sliding part connected to a tip end of the upper root part and configured to be slid with respect to a retractable door glass, and a sealing part extending from the tip end of the upper sliding part toward the base part and having a tip end part attachable to and detachable from the base part, the lower touch lip includes a lower root part fixed to the base part, and a lower sliding part connected to a tip end of the lower root part and is slid with respect to the retractable door glass, and the tip of the upper sliding part is located outside a tip end of the lower sliding part with respect to the base part as a center in a state where the tip end of the upper sliding part is not in contact with the retractable door glass.

According to a second aspect of the present invention, in the first aspect, the vehicular molding further includes an upper lip provided at the base part above the upper touch lip, in which the tip end part of the sealing part is attachable to and detachable from the base part at a position below the upper lip.

According to a third aspect of the present invention, in the second aspect, the sealing part includes: a root extension part extending upward from the upper sliding part toward the base part, and the tip end part extending downward from a tip end of the root extension part toward the base part, and a bent part whose corner part is directed toward the upper lip is provided at a connection location between the root extension part and the tip end part.

According to a fourth aspect of the present invention, in the third aspect, the root extension part is set to a shape that does not contact the upper lip until the bent part abuts on the base part by rotating the upper sliding part around a connection location with the upper root part as a center.

### [Effects of Invention]

In the present invention, the upper touch lip includes a sealing part that extends from the tip end of the upper sliding part toward the base part and has a tip end part that is attachable to and detachable from the base part. Therefore, for example, when the upper sliding part is tilted toward the base part by a reaction force from the retractable door glass, the sealing part abuts on the base part and it is possible to suppress the inflow of outside air between the upper touch lip and the base part.

Further, due to variations in mounting accuracy and the like, a separation distance of the retractable door glass from the vehicular molding is not constant for each vehicle. That is, positions of the vehicular molding and the retractable door glass may vary from vehicle to vehicle. Even in such a case, in the present invention, the tip end of the upper sliding part is located outside the tip end of the lower sliding part with respect to the base part as a center. Therefore, the upper touch lip provided with the sealing part can be more easily brought into contact with the retractable door glass than the lower touch lip. Therefore, even when the position of the retractable door glass is farther from the vehicular molding than a reference position, according to the vehicular molding of the present invention, the sealing part can be surely brought into contact with the base part, and it is possible to suppress the inflow of outside air between the upper touch lip and the base part.

As described above, according to the present invention, it is possible to suppress the inflow of outside air between the upper touch lip and the base part, and to suppress occurrence of an abnormal noise when the vehicle is traveling or the like in the vehicular molding provided with the touch lip.

### [Brief Description of Drawings]

FIG. 1 is a front view showing a front door of a vehicle in which an outside molding is installed according to an embodiment of the present invention.
FIG. 2 is a cross-sectional view showing the outside molding according to the embodiment of the present invention, and is a cross-sectional view taken along a line A-A of FIG. 1.
FIG. 3 is a cross-sectional view of the outside molding according to the embodiment of the present invention, which shows a state in which a door glass is disposed at a reference position.
FIG. 4 is a cross-sectional view of the outside molding according to the embodiment of the present invention, which shows a state in which the door glass is disposed at a position slightly farther from the outside molding than the reference position.
FIG. 5 is a cross-sectional view of the outside molding according to the embodiment of the present invention, which shows a state in which the door glass is disposed at a position slightly closer to the outside molding than the reference position.

### [Description of Embodiments]

Hereinafter, an embodiment of a vehicular molding according to the present invention will be described with reference to the drawings.

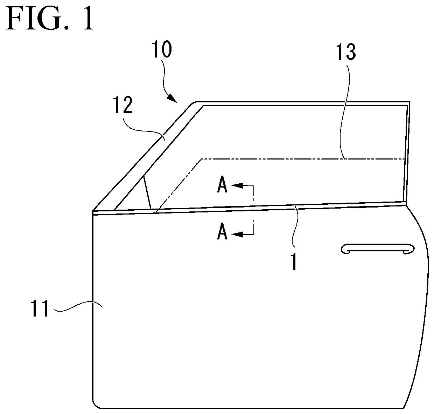

FIG. 1 is a front view showing a front door 10 of a vehicle in which an outside molding 1 (i.e., vehicular molding) of the present embodiment is installed. As shown in FIG. 1, the front door 10 of the vehicle includes a door panel 11, a window frame 12, a door glass 13 (i.e., retractable door glass), and the outside molding 1. The door panel 11 is a strength member formed of a steel sheet, and has, for example, a door outer panel which is an exterior panel and a door inner panel disposed inside the door outer panel. The window frame 12 is a frame body provided on an upper part of the door panel 11. The door glass 13 is disposed in an area surrounded by the window frame 12, and is raised and lowered by a lifting mechanism (that is not shown).

The outside molding 1 of the present embodiment is a long component extending in a front-rear direction of the vehicle (i.e., horizontal direction in FIG. 1) and fixed to and upper end of the door panel 11, and is disposed to fill a gap between the door panel 11 and the door glass 13.

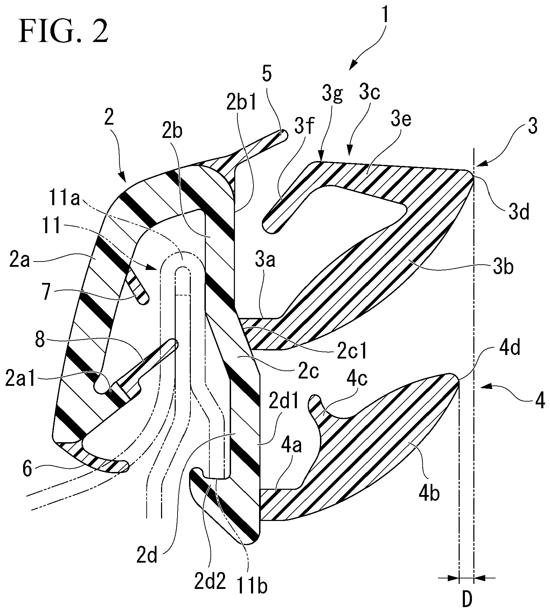

FIG. 2 is a cross-sectional view taken along a line A-A of FIG. 1. As shown in FIG. 2, the door panel 11 to which the outside molding 1 of the present embodiment is attached has an upper end part which is folded back from an outside toward an inside of the vehicle. Hereinafter, the part which is folded back of the door panel 11 is referred to as a folded part 11 a. The door panel 11 has a shape in which the folded part 11 a is provided from one end to the other end in the front-rear direction of the vehicle.

As shown in FIG. 2, the outside molding 1 of the present embodiment includes a base part 2, an upper touch lip 3, a lower touch lip 4, a decorative lip 5 (i.e., upper lip), a cushioning lip 6, and an upper tilt-preventing part 7, a lower tilt-preventing part 8. An end part of the base part 2 is, for example, an open end and is equipped with an end cap.

The base part 2 is a strength member for ensuring a rigidity of the outside molding 1 of the present embodiment and is formed of, for example, a hard resin. The base part 2 is disposed along an extending direction of the outside molding 1. As shown in FIG. 2, the base part 2 is formed by integrating an exterior wall part 2a, an upper wall part 2b, an intermediate wall part 2c, and a lower wall part 2d. Further, the base part 2 has an inverted U-shape as a whole in a cross-sectional shape by disposing the upper wall part 2b, the intermediate wall part 2c, and the lower wall part 2d to face the exterior wall part 2a. That is, since the upper wall part 2b, the intermediate wall part 2c, and the lower wall part 2d are disposed to face the exterior wall part 2a, the entire base part 2 is formed to have an inverted U-shaped cross section.

The exterior wall part 2a is a portion disposed toward the outside of the vehicle when the outside molding 1 is mounted on the door panel 11. An upper end of the exterior wall part 2a is curved and connected to an upper end of the upper wall part 2b. Further, the exterior wall part 2a has a lower end protrusion part 2a1 protruding from an inner wall surface of a lower end part toward an inside (i.e., upper wall part 2b, etc.) of the base part 2. An outer surface of the exterior wall part 2a is a design surface that can be visually recognized from the outside. A surface treatment may be performed on the outer surface of the exterior wall part 2a in order to improve a weather resistance and a design property.

The upper wall part 2b is a portion extending downward from the upper end of the exterior wall part 2a. The upper wall part 2b has a vertical dimension of about half of a vertical dimension of the exterior wall part 2a, and has an outer surface (i.e., a surface on an upper touch lip 3 side) which is a substantially vertical surface. That is, the vertical dimension of the upper wall part 2b is about half of the vertical dimension of the exterior wall part 2a, and the outside surface (i.e., the surface on the upper touch lip 3 side) of the upper wall part 2b is a surface extending along a substantially vertical direction. The outside surface of the upper wall part 2b is a sealing surface 2b1 to which a sealing part 3c, which is described below, of the upper touch lip 3 is contactable.

The intermediate wall part 2c is a portion where an upper end thereof is connected to a lower end of the upper wall part 2b and a lower end thereof is an upper end of the lower wall part 2d. That is, the intermediate wall part 2c is a portion disposed between the upper wall part 2b and the lower wall part 2d, and connecting the upper wall part 2b and the lower wall part 2d. As shown in FIG. 2, the intermediate wall part 2c is disposed in an inclined manner to be displaced toward the door glass 13 side (i.e., a direction away from the exterior wall part 2a) as the intermediate wall part 2c extends downward. An outside surface of the intermediate wall part 2c (i.e., a surface on the upper touch lip 3 side) is an inclined surface 2c1 that is displaced toward the door glass 13 side as the inclined surface extends from the upper wall part 2b side toward the lower wall part 2d side. A root part 3a (i.e., an upper root part) of the upper touch lip 3, which will be described below, is fixed to the inclined surface 2c1. A vertical dimension of the intermediate wall part 2c is set smaller than the vertical dimension of the upper wall part 2b, and the lower end of the intermediate wall part 2c is located above a lower end of the exterior wall part 2a. That is, the vertical dimension of the intermediate wall part 2c is set smaller than the vertical dimension of the upper wall part 2b, and the lower end of the intermediate wall part 2c is located above the lower end of the exterior wall part 2a.

The lower wall part 2d is a portion extending downward from the lower end of the intermediate wall part 2c. A vertical dimension of the lower wall part 2d is substantially equal to the vertical dimension of the upper wall part 2b, and a lower end of the lower wall part 2d is located below the lower end of the exterior wall part 2a. Further, an outside surface of the lower wall part 2d (i.e., a surface on a lower touch lip 4 side) is a substantially vertical surface. That is, the vertical dimension of the intermediate wall part 2c is substantially equal to the vertical dimension of the upper wall part 2b, and the outer surface of the lower wall part 2d (i.e., the surface on the lower touch lip 4 side) is a surface extending along a substantially vertical direction. The outside surface of the lower wall part 2d is a contact surface 2d1 to which a root part 4a (i.e., a lower root part), which is described below, of the lower touch lip 4 is fixed and with which a reaction force adjustment protrusion part 4c, which is described below, of the lower touch lip 4 is brought into contact.

In the present embodiment, as shown in FIG. 2, the lower wall part 2d is disposed closer to the door glass 13 side (i.e., a side where the upper touch lip 3 and the lower touch lip 4 are disposed) than the upper wall part 2b. As a result, the contact surface 2d1 of the lower wall part 2d is disposed closer to the door glass 13 side than the sealing surface 2b1 of the upper wall part 2b.

Further, as shown in FIG. 2, the lower wall part 2d has a retaining part 2d2 protruding from an inner wall surface of a lower end part toward the inside (i.e., exterior wall part 2a) of the base part 2. The retaining part 2d2 is a protrusion part for preventing the outside molding 1 from being not easily detached from the door panel 11 when the tip end 11b of the door panel 11 facing downward due to the curved door panel 11 is brought into contact with the retaining part 2d2 from above.

The upper touch lip 3, the lower touch lip 4, the decorative lip 5, the cushioning lip 6, the upper tilt-preventing part 7 and the lower tilt-preventing part 8 are fixed to the base part 2, and are, for example, formed of soft resins. Of these, the upper touch lip 3 and the lower touch lip 4 are slidably abutted on a surface of the door glass 13.

FIG. 2 shows a state in which the door glass 13 is fully opened and the door glass 13 is not abutted on the upper touch lip 3 and the lower touch lip 4. That is, in FIG. 2, the upper touch lip 3 and the lower touch lip 4 are in a state of not receiving a pressing force from the door glass 13. The posture of the upper touch lip 3 and the lower touch lip 4 shown in FIG. 2 is referred to as a reference posture.

Meanwhile, as the door glass 13 approaches a closed state from the fully opened state, the door glass 13 approaches the upper touch lip 3 and the lower touch lip 4, and the pressing force received by the upper touch lip 3 and the lower touch lip 4 from the door glass 13 gradually increases. Further, the upper touch lip 3 and the lower touch lip 4 are tilted toward the base part 2 side as the door glass 13 approaches the closed state. The posture of the upper touch lip 3 and the lower touch lip 4 when the door glass 13 is fully closed is referred to as a closed posture.

The upper touch lip 3 is a portion which is tilted between the reference posture and the closed posture in accordance with the door glass 13 being opened and closed. The upper touch lip 3 has the root part 3a (i.e., an upper root part), a sliding part 3b (i.e., an upper sliding part), and a sealing part 3c. The root part 3a is a portion of the upper touch lip 3 which is directly fixed to the base part 2. In the present embodiment, the root part 3a of the upper touch lip 3 is fixedly formed on the inclined surface 2c1 of the intermediate wall part 2c of the base part 2. As shown in FIG. 2, the root part 3a extends in a horizontal direction from the inclined surface 2c1 and the sliding part 3b is connected to the tip end thereof. In a longitudinal cross-section shown in FIG. 2, an upper surface and a lower surface of the root part 3a are parallel to each other for a certain distance from the inclined surface 2c1 toward the tip end to which the sliding part 3b is connected. That is, the upper surface and the lower surface of the root part 3a are formed in parallel with each other for a certain distance in a direction from the inclined surface 2c1 toward the tip end of the root part 3a to which the sliding part 3b is connected. Thereafter, a surface of the sliding part 3b is connected to the upper surface of the root part 3a so as to be bent upward, and the lower surface of the root part 3a is connected to a surface of the sliding part 3b so as to be curved upward. That is, in the present embodiment, the root part 3a does not have a constricted portion formed such that both the upper surface and the lower surface are close to each other in a portion until the root part 3a is connected to the sliding part 3b. That is, the root part 3a does not have the constricted portion formed such that both the upper surface and the lower surface are close to each other in the portion from the inclined surface 2c1 to the tip end connected to the sliding part 3b. According to the root part 3a, a portion where a thickness dimension is locally reduced is not provided. That is, the root part 3a is not provided with the portion where the thickness dimension is locally reduced. Therefore, it is possible to prevent a tilting center when the sliding part 3b is pressed by the door glass 13 and tilted, from concentrating on any one location. Therefore, it is possible to prevent only one location from being locally fatigued at a connection portion between the root part 3a and the sliding part 3b.

As shown in FIG. 2, the sliding part 3b is a portion extending obliquely upward, which is a side opposite to the base part 2, from the root part 3a and is directly abutted on the door glass 13. The sliding part 3b slides with respect to the surface of the door glass 13 when the door glass 13 is raised and lowered. Further, the sliding part 3b has a shape in which a thickness dimension is most expanded at a central part, and the root part 3a side and the tip end side to which the sealing part 3c is connected have thickness dimensions smaller than that of the central part in a direction from the root part 3a toward the tip end. That is, in the central part of the sliding part 3b located at a center between a base end and a tip end, the thickness dimension of the sliding part 3b is the largest, and in the base end, a portion near the base end, the tip end, and a portion near the tip end of the sliding part 3b, the thickness dimension of the sliding part 3b is smaller than that of the central part. Although not shown in FIG. 2, a low friction layer that reduces the sliding resistance with the door glass 13 may be formed on the surface of the sliding part 3b.

The tip end 3d of the sliding part 3b is a portion of the upper touch lip 3 located closest to the door glass 13 side. A tip end 4d of a sliding part 4b, which is described below, of the lower touch lip 4 is a portion of the lower touch lip 4 located closest to the door glass 13 side. As shown in FIG. 2, in the reference posture, the tip end 3d of the sliding part 3b of the upper touch lip 3 is disposed outside the tip end 4d of the sliding part 4b of the lower touch lip 4 with respect to the base part 2 as a center. That is, as shown in FIG. 2, when viewed from the base part 2 side, the upper touch lip 3 protrudes farther than the lower touch lip 4 by a distance D. As described above, in the outside molding 1 of the present embodiment, the upper touch lip 3 provided with the sealing part 3c is provided to protrude toward the door glass 13 side with respect to the lower touch lip 4 without the sealing part.

The sealing part 3c is a portion extending from the tip end of the sliding part 3b toward the base part 2. As shown in FIG. 2, in the reference posture, the sealing part 3c has a root extension part 3e that extends upward from the sliding part 3b toward the base part 2 and a tip end part 3f that extends downward from a tip end of the root extension part 3e toward the base part 2. At a connection location between the root extension part 3e and the tip end part 3f, a bent part 3g whose corner part is directed toward the decorative lip 5 is provided. That is, the sealing part 3c is bent such that an intermediate portion protrudes toward the decorative lip 5. That is, the intermediate portion of the sealing part 3c forms the bent part 3g that bends to form the corner part that protrudes toward the decorative lip 5. The root extension part 3e is set to a shape that does not come into contact with the decorative lip 5 until the bent part 3g abuts on the base part 2 by rotating the sliding part 3b around a connection location with the root part 3a as a center. That is, the root extension part 3e does not come into contact with the decorative lip 5 before the bent part 3g comes into contact with the base part 2. That is, in the present embodiment, the upper touch lip 3 provided with the sealing part 3c has a substantially V-shape that gradually separates from the base part 2 as the upper touch lip 3 extends from the root part 3a toward the tip end of the sliding part 3b, and returns to (i.e., approaches) the base part 2 side as the upper touch lip 3 extends from the tip end of the sliding part 3b toward the tip end of the sealing part 3c.

The root extension part 3e of the sealing part 3c has a shape that extends upward from the sliding part 3b toward the base part 2. The root extension part 3e of the sealing part 3c does not come into contact with the decorative lip 5, but narrows a space between the decorative lip 5 and the root extension part 3e from the reference posture toward the closed posture. The tip end part 3f is a portion that can be detached from or attached to the base part 2. The tip end part 3f is bent with respect to the root extension part 3e so as to approach a state parallel to the sealing surface 2b1 of the base part 2. The tip end part 3f is brought into surface contact with the sealing surface 2b1 when the upper touch lip 3 is in the closed posture by the sliding part 3b being strongly pressed by the door glass 13. In this way, the tip end part 3f of the sealing part 3c comes into contact with the sealing surface 2b1 of the base part 2, so that a gap between the upper touch lip 3 and the base part 2 is sealed. As a result, it is possible to suppress the entry of water or outside air between the upper touch lip 3 and the base part 2.

The lower touch lip 4 is disposed below the upper touch lip 3 as shown in FIG. 2. That is, the upper touch lip 3 and the lower touch lip 4 are arranged in a vertical direction. Similar to the upper touch lip 3, the lower touch lip 4 is a portion that is tilted between the reference posture and the closed posture in accordance with the door glass 13 being opened and closed. The lower touch lip 4 includes a root part 4a (i.e., a lower root part), a sliding part 4b (i.e., a lower sliding part), and a reaction force adjustment protrusion part 4c.

The root part 4a is a portion of the lower touch lip 4 which is directly fixed to the base part 2. In the present embodiment, the root part 4a of the lower touch lip 4 is fixedly formed on the contact surface 2d1 of the lower wall part 2d of the base part 2. As shown in FIG. 2, the root part 4a extends in a horizontal direction from the contact surface 2d1 and the sliding part 4b is connected to the tip end thereof. In a longitudinal cross-section shown in FIG. 2, an upper surface and a lower surface of the root part 4a are parallel to each other for a certain distance from the contact surface 2d1 toward the tip end to which the sliding part 4b is connected. That is, the upper surface and the lower surface of the root part 4a are formed in parallel to each other for a certain distance from the contact surface 2d1 toward the tip end to which the sliding part 4b is connected. Thereafter, a surface of the sliding part 4b is connected to the upper surface of the root part 4a so as to be bent upward, and the lower surface of the root part 4a is connected to a surface of the sliding part 4b so as to be curved upward. That is, in the present embodiment, the root part 4a does not have a constricted portion formed such that both the upper surface and the lower surface are close to each other in a portion until the root part 4a is connected to the sliding part 4b. That is, the root part 4a does not have the constricted portion formed such that both the upper surface and the lower surface are close to each other between the base end and the tip end. According to the root part 4a, a portion where a thickness dimension is locally reduced is not provided. That is, the root part 4a is not provided with the portion where the thickness dimension is locally reduced. Therefore, it is possible to prevent a tilting center when the sliding part 4b is pressed by the door glass 13 and tilted, from concentrating on any one location. Therefore, it is possible to prevent only one location from being locally fatigued at a connection portion between the root part 4a and the sliding part 4b. Further, a change rate of a reaction force acting on the door glass 13 from the lower touch lip 4 caused by raising and lowering the door glass 13 can be moderated. Therefore, a sliding resistance when the door glass 13 is raised and lowered is unlikely to change, so that it is possible to prevent a lifting speed of the door glass 13 from changing suddenly.

As shown in FIG. 2, the sliding part 4b is a portion extending obliquely upward, which is a side opposite to the base part 2, from the root part 4a and is directly abutted on the door glass 13. The sliding part 4b slides with respect to the surface of the door glass 13 when the door glass 13 is raised and lowered. Further, the sliding part 4b has a shape in which a thickness dimension is most expanded at a central part, and the root part 4a side and the tip end side have thickness dimensions smaller than that of the central part in a direction from the root part 4a toward the tip end. That is, in the central part of the sliding part 4b located at a center between a base end and a tip end, the thickness dimension of the sliding part 4b is the largest, and in the base end, a portion near the base end, the tip end, and a portion near the tip end of the sliding part 4b, the thickness dimension of the sliding part 4b is smaller than that of the central part. Although not shown in FIG. 2, a low friction layer that reduces the sliding resistance with the door glass 13 may be formed on the surface of the sliding part 4b.

As shown in FIG. 2, the reaction force adjustment protrusion part 4c is a protrusion part provided to protrude from the surface of the sliding part 4b on the base part 2 side in a direction coming close to the base part 2. The reaction force adjustment protrusion part 4c is formed such that a root thereof spreads in a fillet shape and is connected to the sliding part 4b, and further, the reaction force adjustment protrusion 4c is curved toward a tip end thereof so as to be directed in the same direction as a direction in which the tip end of the sliding part 4b is directed. The reaction force adjustment protrusion part 4c increases the reaction force acting on the door glass 13 from the lower touch lip 4 by abutting on the base part 2.

The decorative lip 5 is provided to protrude from a connection part between the exterior wall part 2a and the upper wall part 2b of the base part 2 toward the upper touch lip 3 side. The decorative lip 5 is provided on the base part 2 above the upper touch lip 3 and hides a space between the upper touch lip 3 and the base part 2. Further, in the present embodiment, as shown in FIG. 2, a length dimension of the decorative lip 5 from the base part 2 is set (or formed) such that the decorative lip 5 overlaps the tip end part 3f of the sealing part 3c of the upper touch lip 3 in the reference posture when viewed from above. According to the decorative lip 5, it is possible to suppress the entry of foreign matter and water between the base part 2 and the upper touch lip 3 in the reference posture.

The cushioning lip 6 is a lip formed to protrude downward from the lower end of the exterior wall part 2a of the base part 2 and elastically deforms by abutting on the door panel 11. The cushioning lip 6 prevents rainwater or the like from entering between the door panel 11 and the outside molding 1 of the present embodiment, and absorbs variations during mounting.

The upper tilt-preventing part 7 is a portion provided to protrude from the inner wall surface of the exterior wall part 2a toward the door panel 11. The lower tilt-preventing part 8 is disposed below the upper tilt-preventing part 7, and is formed to protrude from a tip end of the lower end protrusion part 2a1 of the exterior wall part 2a. The upper tilt-preventing part 7 and the lower tilt-preventing part 8 hold the posture of the outside molding 1 with respect to the door panel 11 by abutting on the door panel 11.

In the outside molding 1 of the present embodiment, when the door glass 13 is closed from an opened state, the upper touch lip 3 and the lower touch lip 4 are tilted from the reference posture to the closed posture. In the reference posture, the sealing part 3c of the upper touch lip 3 is separated from the sealing surface 2b1. When the door glass 13 is raised, the door glass 13 comes into contact with the sliding part 3b of the upper touch lip 3 and the sliding part 4b of the lower touch lip 4. Since the door glass 13 approaches the base part 2 by being raised, the sliding part 3b is tilted to approach the base part 2, and the tip end part 3f of the sealing part 3c comes into contact with the sealing surface 2b1.

The outside molding 1 of the present embodiment as described above includes the base part 2 connected to the door panel 11 and the upper touch lip 3 and the lower touch lip 4 supported by the base part 2 and arranged in a vertical direction. Further, the upper touch lip 3 has the root part 3a fixed to the base part 2, the sliding part 3b that is connected to the tip end of the root part 3a and is slid with respect to the door glass 13, and the sealing part 3c that extends from the tip end of the sliding part 3b toward the base part 2 and has the tip end part 3f that can be attached to and detached from the base part 2. Further, the lower touch lip 4 has the root part 4a fixed to the base part 2 and the sliding part 4b that is connected to the tip end of the root part 4a and is slid with respect to the door glass 13. Further, the tip end 3d of the sliding part 3b is located outside the tip end 4d of the sliding part 4b with respect to the base part 2 as a center in a state where the tip end 3d is not in contact with the door glass 13.

In the outside molding 1 of the present embodiment, the upper touch lip 3 includes the sealing part 3c extending from the tip end of the sliding part 3b toward the base part 2, and having the tip end part 3f that can be attached to and detached from the base part 2. Therefore, for example, when the sliding part 3b is tilted toward the base part 2 by the reaction force from the door glass 13, the sealing part 3c comes into contact with the base part 2. Thus, it is possible to suppress the inflow of outside air between the upper touch lip 3 and the base part 2.

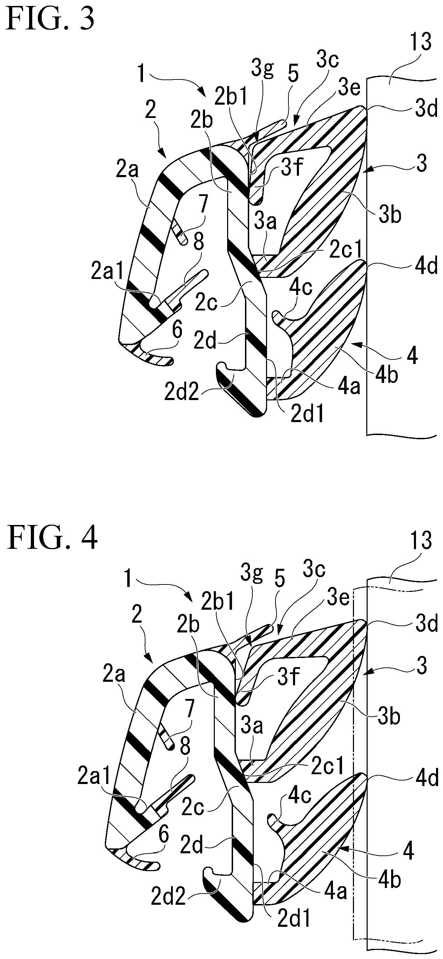

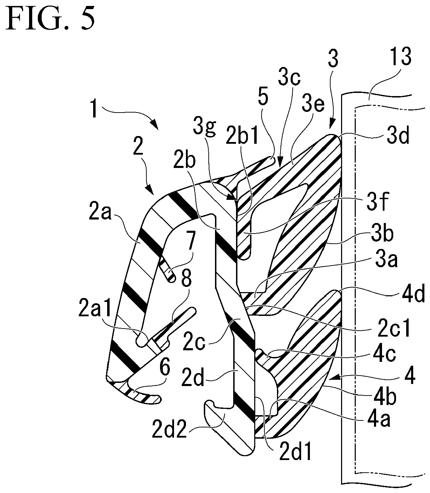

Further, due to variations in mounting accuracy and the like, the separation distance of the door glass 13 from the outside molding 1 is not constant for each vehicle. That is, the positions of the outside molding 1 and the door glass 13 may vary from vehicle to vehicle. FIG. 3 is a schematic cross-sectional view when the door glass 13 is disposed at the designed reference position. Further, FIG. 4 is a schematic cross-sectional view when the door glass 13 is disposed at a position slightly farther from the outside molding 1 than the reference position. Further, FIG. 5 is a schematic cross-sectional view when the door glass 13 is disposed at a position slightly closer to the outside molding 1 than the reference position. In the outside molding 1 of the present embodiment, the tip end of the sliding part 3b is located outside the tip end of the sliding part 4b with respect to the base part 2 as a center. Therefore, the upper touch lip 3 provided with the sealing part 3c can be more easily brought into contact with the door glass 13 than the lower touch lip 4. Therefore, as shown in FIGs. 3 to 5, even when the position of the door glass 13 is displaced with respect to the outside molding 1 from the reference position, the sealing part 3c can be surely abutted on the base part 2. Thus, it is possible to suppress the inflow of outside air between the upper touch lip 3 and the base part 2.

As described above, according to the outside molding 1 of the present embodiment, it is possible to suppress the inflow of outside air between the upper touch lip 3 and the base part 2. Thus, it is possible to suppress the occurrence of the abnormal noise when the vehicle is traveling or the like in the outside molding 1 provided with the touch lip.

Further, in the outside molding 1 of the present embodiment, the decorative lip 5 provided on the base part 2 above the upper touch lip 3 is further provided, and the tip end part 3f of the sealing part 3c can be attached to and detached from the base part 2 at a position below the decorative lip 5. Therefore, the decorative lip 5 can cover a contact location between the sealing part 3c and the base part 2 from above. Thus, it is possible to prevent the sealing part 3c from being separated from the base part 2 due to wind pressure or foreign matter.

Further, in the outside molding 1 of the present embodiment, the sealing part 3c has the root extension part 3e that extends upward from the sliding part 3b toward the base part 2 and the tip end part 3f that extends downward from the tip end of the root extension part 3e toward the base part 2. The bent part 3g whose corner part is directed toward the decorative lip 5 is provided at a connection location between the root extension part 3e and the tip end part 3f. Therefore, the gap between the decorative lip 5 and the sealing part 3c can be narrowed by the bent part 3g. As a result, it is possible to suppress the inflow of outside air between the decorative lip 5 and the sealing part 3c.

Further, in the outside molding 1 of the present embodiment, the root extension part 3e is set (or formed) to have a shape that does not come into contact with the decorative lip 5 until the bent part 3g abuts on the base part 2 by rotating the sliding part 3b around the connection location with the root part 3a as a center. Therefore, it is possible to prevent the reaction force received by the upper touch lip 3 from the door glass 13 from unintentionally fluctuating when the root extension part 3e comes into contact with the decorative lip 5.

Although the preferred embodiment of the present invention has been described above with reference to the accompanying drawings, the present invention is not limited to the above-described embodiment. The various shapes, combinations and the like of the constituent members shown in the above-described embodiment are examples, and can be variously changed based on design requirements and the like without departing from the spirit of the present invention.

For example, in the above embodiment, a configuration in which the base part 2 is formed of the hard resin has been described. However, the present invention is not limited to this configuration. For example, it is also possible to adopt, as the base part 2, a configuration which includes a metal core material or a configuration which use a member in which the metal core material and the hard resin are joined.

Further, in the above embodiment, an example of applying the present invention to the outside molding has been described. However, the present invention is not limited to this configuration. For example, the present invention can be applied to other vehicular moldings.

### [Industrial Applicability]

According to the present invention, it is possible to suppress the inflow of outside air between the upper touch lip and the base part, and to suppress the occurrence of an abnormal noise when the vehicle is traveling or the like in the vehicular molding provided with the touch lip.

### [Reference Signs List]

- 1: Outside molding (i.e., vehicular molding)
- 2: Base part
- 2a: Exterior wall part
- 2a1: Lower end protrusion part
- 2b: Upper wall part
- 2b1: Sealing surface
- 2c: Intermediate wall part
- 2c1: Inclined surface
- 2d: Lower wall part
- 2d1: Contact surface
- 2d2: Stop part
- 3: Upper touch lip
- 3a: Root part (i.e., upper root part)
- 3b: Sliding part (i.e., upper sliding part)
- 3c: Sealing part
- 3d:: Tip end
- 3e: Root extension part
- 3f: Tip end part
- 3g: Bent part
- 4: Lower touch lip
- 4a: Root part (i.e., lower root part)
- 4b: Sliding part (i.e., lower sliding part)
- 4c: Reaction force adjustment protrusion part
- 4d: Tip end
- 5: Decorative lip (i.e., upper lip)
- 11: Door panel
- 13: Door glass

## Claims

1. A vehicular molding comprising:
a base part connected to a door panel; and
an upper touch lip and a lower touch lip that are supported by the base part and arranged in a vertical direction,
wherein the upper touch lip includes
an upper root part fixed to the base part,
an upper sliding part connected to a tip end of the upper root part and configured to be slid with respect to a retractable door glass, and
a sealing part extending from a tip end of the upper sliding part toward the base part and having a tip end part attachable to and detachable from the base part,
the lower touch lip includes
a lower root part fixed to the base part, and
a lower sliding part connected to a tip end of the lower root part and configured to be slid with respect to the retractable door glass, and
the tip end of the upper sliding part is located outside a tip end of the lower sliding part with respect to the base part as a center in a state where the tip end of the upper sliding part is not in contact with the retractable door glass.

2. The vehicular molding according to Claim 1, further comprising:
an upper lip provided at the base part above the upper touch lip,
wherein the tip end part of the sealing part is attachable to and detachable from the base part at a position below the upper lip.

3. The vehicular molding according to Claim 2, wherein
the sealing part includes:
a root extension part extending upward from the upper sliding part toward the base part; and
the tip end part extending downward from a tip end of the root extension part toward the base part; and
a bent part whose corner part is directed toward the upper lip is provided at a connection location between the root extension part and the tip end part.

4. The vehicular molding according to Claim 3, wherein
the root extension part is set to a shape that does not contact the upper lip until the bent part abuts on the base part by rotating the upper sliding part around a connection location with the upper root part as a center.
